# EUROPEAN PATENT APPLICATION

(11) **EP 4 589 362 A1**
(43) Date of publication of application: **23.07.2025**
(21) Application number: 23889052.9
(22) Date of filing: 03.11.2023
(51) Int. Cl.: G02B 27/01, G06F 3/01, G06F 1/16

(54) **WEARABLE ELECTRONIC APPARATUS**

(30) Priority: 09.11.2022 KR 20220148647; 02.12.2022 KR 20220166904
(71) Applicant: Samsung Electronics Co., Ltd., Suwon-si, Gyeonggi-do 16677 (KR)
(72) Inventor: HONG, Myeongjae, Suwon-si Gyeonggi-do 16677 (KR); LEE, Jinchoul, Suwon-si Gyeonggi-do 16677 (KR)
(74) Representative: Nederlandsch Octrooibureau
(86) International application number: PCT/KR2023/017505
(87) International publication number: WO 2024/101791

(57) **Abstract**

A wearable electronic apparatus according to an embodiment disclosed herein may comprise: a lens frame formed to accommodate a display member; a pair of wearable members connected to respective ends of the lens frame; at least one seating region; and at least one support structure connected to the seating region. The pair of wearable members may each include a first surface and a second surface facing the opposite direction as the first surface. The seating region may be formed on a portion of the first surface. The support structure may include a pad and a driving assembly disposed between the seating region and the pad. The support structure may include: a support surface facing the seating region; a fixed end rotatably connected to a portion of the seating region; and a moving end located on the opposite side to the fixed end. The driving assembly may be configured to move the moving end in a first axis direction relative to the seating region. When the driving assembly is operating, at least a portion of the pad can be rotated relative to the seating region, and the pad angle between the pad and the seating region can be changed.

## Description

### [Technical Field]

Embodiments of the disclosure relate to a wearable electronic device including a supporting structure.

### [Background Art]

Portable electronic devices, such as electronic schedulers, portable multimedia players, mobile communication terminals, or tablet PCs, are generally equipped with a display member and a battery, and come in bar, clamshell, or slidable shape by the shape of the display member or battery. As display members and batteries are nowadays made smaller and have enhanced performance, wearable electronic device which may be put on the user's wrist, head, or other body portions are commercially available. Wearable electronic devices may be directly worn on the human body, presenting better portability and user accessibility.

Wearable electronic devices may include electronic devices wearable on the user's face, such as head-mounted devices (HMDs). The head-mounted device may be usefully used to implement virtual reality or augmented reality. For example, the wearable electronic device may stereoscopically provide the image of the virtual space in the game played on TV or computer monitor and may implement virtual reality by blocking the real-world image. Other types of wearable electronic devices may implement virtual images while providing an environment in which the real-world image of the space where the user actually stays may be visually perceived, thereby providing augmented reality to provide various pieces of visual information to the user.

The above-described information may be provided as background for the purpose of helping understanding of the disclosure. No claim or determination is made as to whether any of the foregoing is applicable as background art in relation to the disclosure.

### [Disclosure of Invention]

### [Solution to Problems]

A wearable electronic device according to an embodiment of the disclosure may comprise a lens frame formed to accommodate a display member, a pair of wearing members respectively connected to two opposite ends of a lens frame, at least one seating area, and at least one supporting structure connected to the seating area. Each of the pair of wearing members may include a first surface and a second surface facing in a direction opposite to the first surface. The seating areas may be formed on a portion of the first surface of the pair of wearing members. The supporting structures may include a pad and a driving assembly at least partially disposed between the seating area and the pad. The supporting structure may include a supporting surface facing the seating area, a fixed end rotatably connected to a portion of the seating area, and a movable end positioned opposite to the fixed end. The driving assembly may be configured to move the movable end relative to the seating end in a first axis direction. When the driving assembly operates, at least a portion of the pad may be rotated relative to the seating area, and a pad angle between the pad and the seating area may be changed.

### [Brief Description of Drawings]

The foregoing and other aspects, configurations, and/or advantages of an embodiment of the disclosure will be more apparent from the following detailed description taken in conjunction with the accompanying drawings.
FIG. 1 is a block diagram illustrating an electronic device in a network environment according to an embodiment of the disclosure;
FIG. 2 is a perspective view illustrating a wearable electronic device according to an embodiment of the disclosure;
FIG. 3 is a perspective view illustrating a wearable electronic device according to an embodiment of the disclosure;
FIG. 4 is an exploded perspective view illustrating a wearable electronic device according to an embodiment of the disclosure;
FIG. 5 is a perspective view illustrating a wearing member and a pad according to an embodiment of the disclosure;
FIG. 6 is a side view illustrating a wearing member and a supporting structure in a first state according to an embodiment of the disclosure;
FIG. 7 is a side view illustrating a wearing member and a supporting structure in a second state according to an embodiment of the disclosure;
FIG. 8 is a view illustrating a portion of a supporting structure according to an embodiment of the disclosure;
FIG. 9 is a view illustrating a portion of a driving assembly according to an embodiment of the disclosure;
FIG. 10 is a view illustrating a wearing member and a supporting structure in a first state according to an embodiment of the disclosure;
FIG. 11 is a view illustrating a wearing member and a supporting structure in a second state according to an embodiment of the disclosure;
FIG. 12 is a plan view illustrating a wearable electronic device and a wearing subject according to an embodiment of the disclosure;
FIG. 13 is a plan view illustrating a wearable electronic device and a wearing subject according to an embodiment of the disclosure;
FIG. 14 is a procedural flowchart illustrating a method for adjusting a pad angle of a wearable electronic device according to an embodiment of the disclosure; and
FIG. 15 is a procedural flowchart illustrating a method for adjusting a pad angle of a wearable electronic device according to an embodiment of the disclosure.

Throughout the drawings, like reference numerals may be assigned to like parts, components, and/or structures.

### [Mode for the Invention]

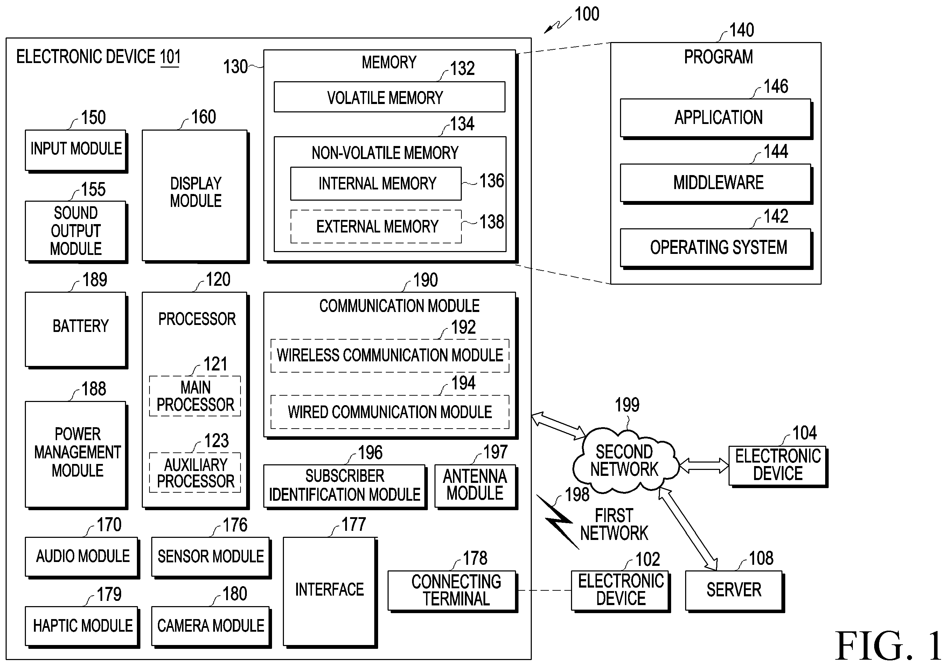

FIG. 1 is a block diagram illustrating an electronic device in a network environment according to an embodiment of the disclosure;

Referring to FIG. 1, the electronic device (or wearable electronic device) in the network environment 100 may communicate with an external electronic device 102 via a first network 198 (e.g., a short-range wireless communication network), or an external electronic device 104 or a server 108 via a second network 199 (e.g., a long-range wireless communication network). According to an embodiment, the electronic device 101 may communicate with the external electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a second sensor module configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the external electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

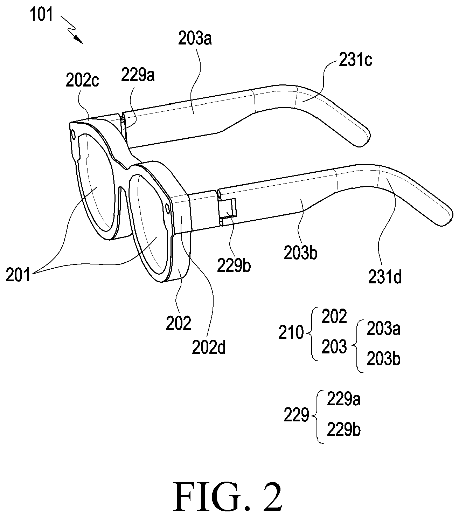

FIG. 2 is a perspective view illustrating a wearable electronic device according to an embodiment of the disclosure. The configuration of the wearable electronic device 101 of FIG. 2 may be identical in whole or part to the configuration of the electronic device 101 of FIG. 1.

Referring to FIG. 2, the wearable electronic device 101 may include an electronic device of a type (e.g., glasses type) that may be worn on the user's body (e.g., head). For example, the user may visually recognize ambient things or environment while wearing the wearable electronic device 101. For example, the wearable electronic device 101 may include a head-mounted device (HMD) or smart glasses capable of providing images directly in front of the user's eyes.

According to an embodiment, the wearable electronic device 101 may include a housing that forms the exterior of the wearable electronic device 101. The housing 210 may provide a space in which components of the wearable electronic device 101 may be disposed. For example, the housing 210 may include a lens frame 202 and at least one wearing member 203.

According to an embodiment, the wearable electronic device 101 may include a display member 201 disposed in the housing 210 and capable of outputting a visual image. For example, the wearable electronic device 101 may include at least one display member 201 capable of providing the user with visual information (or images). For example, the display member 201 may include a module equipped with a lens, a display, a waveguide, and/or a touch circuit. According to an embodiment, the display member 201 may be transparent or translucent. According to an embodiment, the display member 201 may include a semi-transparent glass or a window member the light transmittance of which may be adjusted as the coloring concentration is adjusted.

According to an embodiment, the lens frame 202 may accommodate at least a portion of the display member 201. For example, the lens frame 202 may surround at least a portion of the display member 201. According to an embodiment, the lens frame 202 may position at least one of the display members 201 to correspond to the user's eye. According to an embodiment, the lens frame 202 may include the rim of a normal eyeglass structure. According to an embodiment, the lens frame 202 may include at least one closed loop surrounding the display devices 201. According to an embodiment, the lens frame 202 may include a first end 202c and a second end 202d disposed opposite to the first end 202c. The first end 202c may be disposed adjacent to the first wearing member 203a, and the second end 202d may be disposed adjacent to the second wearing member 203b.

According to an embodiment, the wearing members 203 may extend from the lens frame 202. For example, the wearing members 203 may extend from ends of the lens frame 202 and, together with the lens frame 202, may be supported and/or positioned on a part (e.g., ears) of the user's body. According to an embodiment, the wearing members 203 may be rotatably coupled to the lens frame 202 through hinge structures 229. According to an embodiment, the wearing member 203 may include a first surface 231c configured to face the user's body and a second surface 231d opposite to the first surface 231c. According to an embodiment (not shown), at least a portion of the wearing member 203 may be formed of a flexible material (e.g., rubber). For example, at least a portion of the wearing member 203 may be formed in a band shape surrounding at least a portion of the user's body (e.g., ears).

According to an embodiment, the wearable electronic device 101 may include the hinge structures 229 configured to fold the wearing members 203 on the lens frame 202. The hinge structure 229 may be disposed between the lens frame 202 and the wearing member 203. While the user does not wear the wearable electronic device 101, the user may fold the wearing members 203 on the lens frame 202 to carry or store the electronic device. According to an embodiment, the hinge structure 229 may include a first hinge structure 229a connected to a portion (e.g., the first end 202c) of the lens frame 202 and the first wearing member 203a and a second hinge structure 229b connected to a portion (e.g., the second end 202d) of the lens frame 202 and the second wearing member 203b.

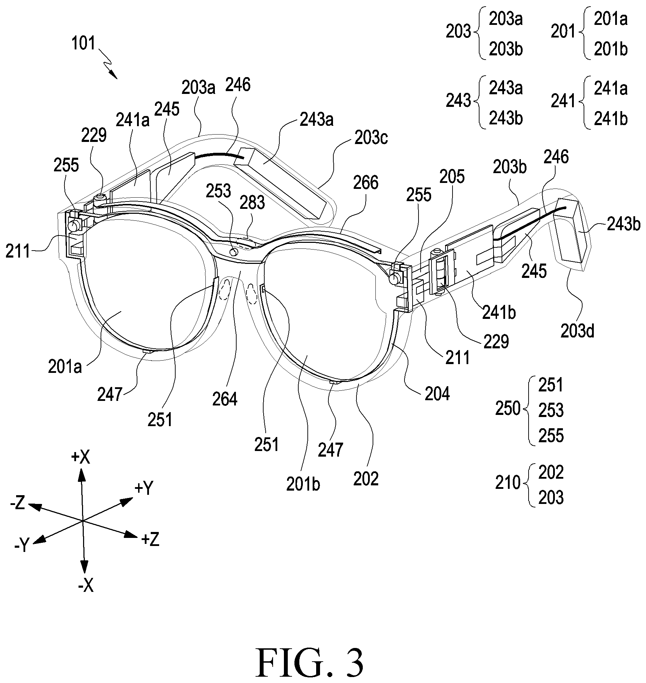

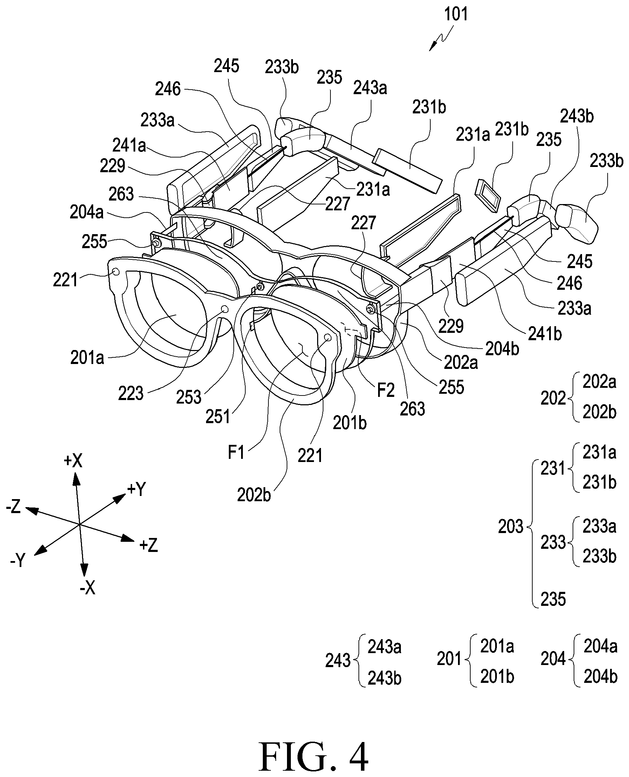

FIG. 3 is a perspective view illustrating a wearable electronic device according to an embodiment of the disclosure. FIG. 4 is an exploded perspective view illustrating a wearable electronic device according to an embodiment of the disclosure.

The configuration of the display member 201, the lens frame 202, the wearing member 203, and the hinge structure 229 of FIG. 3 and/or 4 may be identical in whole or part to the configuration of the display member 201, the lens frame 202, the wearing member 203, and the hinge structure 229 of FIG. 2.

Referring to FIGS. 3 and 4, the wearable electronic device 101 may include a display member 201, a lens frame 202, a wearing member 203, a hinge structure 229, at least one circuit board 241, at least one battery 243, at least one power transfer structure 246, a camera module 250, and/or a sensor module (not shown).

According to an embodiment, the wearable electronic device 101 may obtain and/or recognize a visual image regarding an object or environment in the direction (e.g., -Y direction) in which the wearable electronic device 101 faces or the direction in which the user gazes, using the camera module 250 (e.g., the camera module 180 of FIG. 1) and may receive information regarding the object or environment from an external electronic device (e.g., the external electronic device 102 or 104 of FIG. 1 or the server 108 of FIG. 1) through a network (e.g., the first network 198 or second network 199 of FIG. 1). In an embodiment, the wearable electronic device 101 may provide the received object- or environment-related information, in the form of an audio or visual form, to the user. The wearable electronic device 101 may provide the received object- or environment-related information, in a visual form, to the user through the display members 201, using the display module (e.g., the display module 160 of FIG. 1). For example, the wearable electronic device 101 may implement augmented reality (AR) by implementing the object- or environment-related information in a visual form and combining it with an actual image of the user's surrounding environment.

According to an embodiment, a pair of display members 201 may be provided and disposed to correspond to the user's left and right eyes, respectively, with the wearable electronic device 101 worn on the user's body. For example, the display member 201 may include a first display member 201a and a second display member 201b disposed to be spaced apart from the first display member 201a. The first display member 201a may be disposed to correspond to the user's right eye, and the second display member 201b may be disposed to correspond to the user's left eye.

According to an embodiment, the display member 201 may include a first surface F1 facing in a direction (e.g., -y direction) in which external light is incident and a second surface F2 facing in a direction (e.g., +y direction) opposite to the first surface F1. With the user wearing the wearable electronic device 101, at least a portion of the light or image coming through the first surface F1 may be incident on the user's left eye and/or right eye through the second surface F2 of the display member 201 disposed to face the user's left eye and/or right eye.

According to an embodiment, the lens frame 202 may include at least two or more frames. For example, the lens frame 202 may include a first frame 202a and a second frame 202b. According to an embodiment, when the user wears the wearable electronic device 101, the first frame 202a may be a frame of the portion facing the user's face, and the second frame 202b may include a portion of the lens frame 202 spaced from the first frame 202a in the gazing direction (e.g., -Y direction) in which the user gazes.

According to an embodiment, the electronic device 101 may include a light output module 211 configured to provide an image and/or video to the user. For example, the light output module 211 may include a display panel (not shown) capable of outputting images and a lens (not shown) corresponding to the user's eye and guiding images to the display member 201. For example, the user may obtain the image output from the display panel (not shown) of the light output module 211 through the lens of the light output module 211. According to an embodiment, the light output module 211 may include a device configured to display various information. For example, the light output module 211 may include at least one of a liquid crystal display (LCD), a digital mirror device (DMD), a liquid crystal on silicon (LCoS), or an organic light emitting diode (OLED), or a micro light emitting diode (micro LED). According to an embodiment, when the light output module 211 and/or the display member 201 includes one of a liquid crystal display device, a digital mirror display device, or a silicon liquid crystal display device, the wearable electronic device 101 may include a light output module 211 and/or a light source emitting light to the display area of the display member 201. According to an embodiment, when the light output module 211 and/or the display member 201 includes organic light emitting diodes or micro LEDs, the wearable electronic device 101 may provide virtual images to the user without a separate light source.

According to an embodiment, at least a portion of the light output module 211 may be disposed in the housing 210. For example, the light output module 211 may be connected to the display member 201 and may provide images to the user through the display member 201. For example, the image output from the light output module 211 may be incident on the display member 201 through an input optical member (not shown) positioned at an end of the display member 201 and be radiated to the user's eyes through a waveguide (not shown) and an output optical member (not shown) positioned in at least a portion of the display member 201.

According to an embodiment, the wearable electronic device 101 may include a circuit board 241 (e.g., a printed circuit board (PCB), a printed board assembly (PBA), a flexible PCB (FPCB), or a rigid-flexible PCB (RFPCB)) accommodating components for driving the wearable electronic device 101. For example, the circuit board 241 may include at least one integrated circuit chip, and at least one of a processor (not shown) (e.g., the processor 120 of FIG. 1), a memory (not shown) (e.g., the memory 130 of FIG. 1), a power management module (not shown) (e.g., the power management module 188 of FIG. 1), or a communication module (e.g., the communication module 190 of FIG. 1) may be provided in the integrated circuit chip. According to an embodiment, a circuit board 241 may be disposed in the wearing member 203 of the housing 210. For example, the circuit board 241 may include a first circuit board 241a disposed in the first wearing member 203a and a second circuit board 241b disposed in the second wearing member 203b. According to an embodiment, the communication module (e.g., the communication module 190 of FIG. 1) may be mounted on the first circuit board 241a positioned in the first wearing member 203a, and the processor (e.g., the processor 120 of FIG. 1) may be mounted on the second circuit board 241b positioned in the second wearing member 203b. According to an embodiment, the circuit board 241 may be electrically connected to the battery 243 (e.g., the battery 189 of FIG. 1) through the power transfer structure 246. According to an embodiment, the circuit board 241 may include an interposer board.

According to an embodiment, the battery 243 may be connected with components (e.g., the light output module 211, the circuit board 241, and the speaker module 245, the microphone module 247, and/or the camera module 250) of the wearable electronic device 101 and may supply power to the components of the wearable electronic device 101.

According to an embodiment, at least a portion of the battery 243 may be disposed in the wearing member 203. According to an embodiment, the battery 243 may include a first battery 243a disposed in the first wearing member 203a and a second battery 243b disposed in the second wearing member 203b. According to an embodiment, batteries 243 may be disposed adjacent to ends 203c and 203d of the wearing members 203.

According to an embodiment, the speaker module 245 (e.g., the audio module 170 or the sound output module 155 of FIG. 1) may convert an electrical signal into sound. At least a portion of the speaker module 245 may be disposed in the wearing member 203 of the housing 210. According to an embodiment, the speaker module 245 may be located in the wearing member 203 to correspond to the user's ear. According to an embodiment (e.g., FIG. 3), the speaker module 245 may be disposed next to the circuit board 241. For example, the speaker module 245 may be disposed between the circuit board 241 and the battery 243. According to an embodiment (not shown), the speaker module 245 may be disposed on the circuit board 241. For example, the speaker module 245 may be disposed between the circuit board 241 and the inner case (e.g., the inner case 231 of FIG. 4).

According to an embodiment, the wearable electronic device 101 may include a power transfer structure 246 configured to transfer power from the battery 243 to an electronic component (e.g., the light output module 211) of the wearable electronic device 101. For example, the power transfer structure 246 may be electrically connected to the battery 243 and/or the circuit board 241, and the circuit board 241 may transfer the power accommodated through the power transfer structure 246 to the light output module 211. According to an embodiment, the power transfer structure 246 may include a component capable of transferring power. For example, the power transfer structure 246 may include a flexible printed circuit board or wiring. For example, the wiring may include a plurality of cables (not shown). In an embodiment, various changes may be made to the shape of the power transfer structure 246 considering the number and/or type of the cables.

According to an embodiment, the microphone module 247 (e.g., the input module 150 and/or the audio module 170 of FIG. 1) may convert a sound into an electrical signal. According to an embodiment, the microphone module 247 may be disposed in the lens frame 202. For example, at least one microphone module 247 may be disposed on a lower end (e.g., in the -X-axis direction) and/or on an upper end (e.g., in the +X-axis direction) of the wearable electronic device 101. According to an embodiment, the wearable electronic device 101 may more clearly recognize the user's voice using voice information (e.g., sound) obtained by the at least one microphone module 247. For example, the electronic device 101 may distinguish the voice information from the ambient noise based on the obtained voice information and/or additional information (e.g., low-frequency vibration of the user's skin and bones). For example, the wearable electronic device 101 may clearly recognize the user's voice and may perform a function of reducing ambient noise (e.g., noise canceling).

According to an embodiment, the camera module 250 may capture a still image and/or a video. The camera module 250 may include at least one of a lens, at least one image sensor, an image signal processor, or a flash. According to an embodiment, the camera module 250 may be disposed in the lens frame 202 and may be disposed around the display member 201.

According to an embodiment, the camera module 250 may include at least one first camera module 251. According to an embodiment, the first camera module 251 may capture the trajectory of the user's eye (e.g., a pupil) or gaze. For example, the first camera module 251 may include a light emitting unit (e.g., an IR LED) (not shown) configured to emit light in an infrared band and a camera structure (not shown) configured to capture the reflection pattern of the light emitted by the light emitting unit to the user's eyes. According to an embodiment, the processor (e.g., the processor 120 of FIG. 1) may adjust the position of the virtual image so that the virtual image projected on the display member 201 corresponds to the direction in which the user's pupil gazes. According to an embodiment, it is possible to track the trajectory of the user's eyes or gaze using a plurality of first camera modules 251 having the same specifications and performance.

According to an embodiment, the first camera module 251 may periodically or aperiodically transmit information related to the trajectory of the user's eye or gaze (e.g., trajectory information) to the processor (e.g., the processor 120 of FIG. 1). According to an embodiment, when the first camera module 251 detects a change in the user's gaze based on the trajectory information (e.g., when the user's eyes move more than a reference value with the head positioned still), the first camera module 251 may transmit the trajectory information to the processor.

According to an embodiment, the camera modules 250 may include at least one second camera module 253. According to an embodiment, the second camera module 253 may capture an external image. According to an embodiment, the second camera module 253 may capture an external image through the second optical hole 223 formed in the second frame 202b. For example, the second camera module 253 may include a high-resolution color camera, and it may include a high resolution (HR) or photo video (PV) camera. According to an embodiment, the second camera module 253 may provide an auto-focus (AF) function and an optical image stabilizer (OIS) function.

According to an embodiment (not shown), the wearable electronic device 101 may include a flash (not shown) positioned adjacent to the second camera module 253. For example, the flash (not shown) may provide light for increasing brightness (e.g., illuminance) around the wearable electronic device 101 when an external image is obtained by the second camera module 253, thereby reducing difficulty in obtaining an image due to the dark environment, the mixing of various light beams, and/or the reflection of light.

According to an embodiment, the camera modules 250 may include at least one third camera module 255. According to an embodiment, the third camera module 255 may capture the user's motion through a first optical hole 221 formed in the lens frame 202. For example, the third camera module 255 may capture the user's gesture (e.g., hand gesture). Third camera modules 255 and/or first optical holes 221 may be disposed on two opposite sides of the lens frame 202 (e.g., the second frame 202b), e.g., formed in two opposite ends of the lens frame 202 (e.g., the second frame 202b) with respect to the Z direction. According to an embodiment, the third camera module 255 may include a global shutter (GS)-type camera. For example, the third camera module 255 may be a camera supporting 3DoF (degrees of freedom) or 6DoF, which may provide position recognition and/or motion recognition in a 360-degree space (e.g., omni-directionally). According to an embodiment, the third camera modules 255 may be stereo cameras and may perform the functions of simultaneous localization and mapping (SLAM) and user motion recognition using a plurality of global shutter-type cameras with the same specifications and performance. According to an embodiment, the third camera module 255 may include an infrared (IR) camera (e.g., a time of flight (TOF) camera or a structured light camera). For example, the IR camera may be operated as at least a portion of a sensor module (e.g., the sensor module 176 of FIG. 1) for detecting a distance from the subject.

According to an embodiment, at least one of the first camera module 251 or the third camera module 255 may be replaced with a sensor module (e.g., the sensor module 176 of FIG. 1). For example, the sensor module may include at least one of a vertical cavity surface emitting laser (VCSEL), an infrared sensor, and/or a photodiode. For example, the photodiode may include a positive intrinsic negative (PIN) photodiode or an avalanche photodiode (APD). The photodiode may be interpreted as a photo detector or a photo sensor.

According to an embodiment, at least one of the first camera module 251, the second camera module 253, and the third camera module 255 may include a plurality of camera modules (not shown). For example, the second camera module 253 may include a plurality of lenses (e.g., wide-angle and telephoto lenses) and image sensors and may be disposed on one surface (e.g., a surface facing in the -Y axis) of the electronic device 101. For example, the wearable electronic device 101 may include a plurality of camera modules having different properties (e.g., angle of view) or functions and control to change the angle of view of the camera module based on the user's selection and/or trajectory information. At least one of the plurality of camera modules may include a wide-angle camera and at least another of the plurality of camera modules may form a telephoto camera.

According to an embodiment, the processor (e.g., processor 120 of FIG. 1) may determine the motion of the wearable electronic device 101 and/or the user's motion using information for the wearable electronic device 101 obtained using at least one of a gesture sensor, a gyro sensor, or an acceleration sensor of the sensor module (e.g., the sensor module 176 of FIG. 1) and the user's action (e.g., approach of the user's body to the wearable electronic device 101) obtained using the third camera module 255. According to an embodiment, in addition to the above-described sensor, the wearable electronic device 101 may include a magnetic (geomagnetic) sensor capable of measuring an orientation using a magnetic field and magnetic force lines and/or a hall sensor capable of obtaining motion information (e.g., moving direction or distance) using the strength of a magnetic field. For example, the processor may determine the motion of the electronic device 101 and/or the user's motion based on information obtained from the magnetic (geomagnetic) sensor and/or the hall sensor.

According to an embodiment (not shown), the wearable electronic device 101 may perform an input function (e.g., a touch and/or pressure sensing function) capable of interacting with the user. For example, a component configured to perform a touch and/or pressure sensing function (e.g., a touch sensor and/or a second sensor module) may be disposed in at least a portion of the wearing member 203. The wearable electronic device 101 may control the virtual image output through the display member 201 based on the information obtained through the components. For example, a sensor associated with a touch and/or pressure sensing function may be implemented in various types, e.g., a resistive type, a capacitive type, an electro-magnetic (EM) type, or an optical type. According to an embodiment, the component configured to perform the touch and/or pressure sensing function may be identical in whole or part to the configuration of the input module 150 of FIG. 1.

According to an embodiment, the wearable electronic device 101 may including a reinforcing member 266 that is disposed in an inner space of the lens frame 202 and formed to have a higher rigidity than that of the lens frame 202.

According to an embodiment, the electronic device 101 may include a lens structure 273. The lens structure 273 may refract at least a portion of light. For example, the lens structure 273 may include a prescription lens having a designated refractive power. According to an embodiment, at least a portion of the lens structure 273 may be disposed behind (e.g., +Y direction) of the display member 201. For example, the lens structure 273 may be positioned between the display member 201 and the user's eye.

According to an embodiment, the housing 210 may include a hinge cover 227 that may conceal a portion of the hinge structure 229. For example, another part of the hinge structure 229 may be accommodated or hidden between an inner cover 231 and an outer cover 233, which are described below.

According to an embodiment, the wearing member 203 may include the inner cover 231 and the outer cover 233. For example, the inner cover 231 may be, e.g., a cover configured to face the user's body or directly contact the user's body, and may be formed of a material having low thermal conductivity, e.g., a synthetic resin. According to an embodiment, the inner cover 231 may include a first surface (e.g., the first surface 231c of FIG. 2) facing the user's body. For example, the outer cover 233 may include, e.g., a material (e.g., a metal) capable of at least partially transferring heat and may be coupled to the inner cover 231 to face each other. According to an embodiment, the outer cover 233 may include a second surface (e.g., the second surface 231d of FIG. 2) opposite to the first surface 231c. In an embodiment, at least one of the circuit board 241 or the speaker module 245 may be accommodated in a space separated from the battery 243 in the wearing member 203. In the illustrated embodiment, the inner cover 231 may include a first cover 231a accommodating the circuit board 241 and/or the speaker module 245 and a second cover 231b accommodating the battery 243, and the outer cover 233 may include a third cover 233a coupled to face the first cover 231a and a fourth cover 233b coupled to face the second cover 231b. For example, the first cover 231a and the third cover 233a may be coupled (hereinafter, 'first cover portions 231a and 233a') to accommodate the circuit board 241 and/or the speaker module 245, and the second cover 231b and the fourth cover 233b may be coupled (hereinafter, 'second cover portions 231b and 233b') to accommodate the battery 343.

According to an embodiment, the first cover portions 231a and 233a may be rotatably coupled to the lens frame 202 through the hinge structure 229, and the second cover portions 231b and 233b may be connected or mounted to the ends of the first cover portions 231a and 233a through the connecting structure 235. According to an embodiment, a portion of the connecting structure 235 in contact with the user's body may be formed of a material having low thermal conductivity, e.g., an elastic material, such as silicone, polyurethane, or rubber, and another portion thereof which does not come into contact with the user's body may be formed of a material having high thermal conductivity (e.g., a metal). For example, when heat is generated from the circuit board 241 or the battery 243, the connecting structure 235 may reduce heat transfer to the portion in contact with the user's body while dissipating or discharging heat through the portion not in contact with the user's body. According to an embodiment, a portion of the connecting structure 235 configured to come into contact with the user's body may be interpreted as a portion of the inner cover 231, and a portion of the connecting structure 235 that does not come into contact with the user's body may be interpreted as a portion of the outer cover 233. According to an embodiment (not shown), the first cover 231a and the second cover 231b may be integrally configured without the connecting structure 235, and the third cover 233a and the fourth cover 233b may be integrally configured without the connecting structure 235.

According to an embodiment, there may be included a connection portion 264 between members 201b. For example, the connection portion 264 may be interpreted as a portion corresponding to the nose support of the glasses.

According to an embodiment, the electronic device 101 may include a connection member 204. According to an embodiment, the circuit board 241 may be connected to the connection member 204 and transfer electrical signals to the components of the electronic device 101 (e.g., the light output module 211 and/or the camera module 250) through the connection member 204. For example, the control signal transferred from a processor (e.g., the processor 120 of FIG. 1) positioned on the circuit board 241 may be transferred to electronic components by at least a portion of the connection member 204. For example, at least a portion of the connection member 204 may include a line (not shown) electrically connected to components of the electronic device 101.

According to an embodiment, the connection member 204 may include a first connection member 204a at least partially disposed in the first wearing member 203a and/or a second connection member 204b at least partially disposed in the second wearing member 203b. According to an embodiment, at least a portion of the first connection member 204a and/or the second connection member 204b may face the hinge structure 229. For example, the first connection member 204a may extend from the first circuit board 241a to the inside of the lens frame 202 across the hinge structure 229. The second connection member 204b may extend from the second circuit board 241b to the inside of the lens frame 202 across the hinge structure 229. For example, a portion of the first connection member 204a and a portion of the second connection member 204b may be disposed in the wearing member 203, and another portion may be disposed in the lens frame 202.

According to an embodiment, the first connection member 204a and/or the second connection member 204b may include a structure that may be folded or unfolded based on rotation of the hinge structure 229. For example, the first connection member 204a and/or the second connection member 204b may include a flexible printed circuit board (FPCB). According to an embodiment, the first connection member 204a may be electrically and/or mechanically connected to the first circuit board 241a. According to an embodiment, the second connection member 204b may be electrically and/or mechanically connected to the second circuit board 241b. According to an embodiment, the first connection member 204a and/or the second connection member 204b may include a structure (e.g., a line and/or cable) for transferring signals.

According to an embodiment, the sensor module (not shown) (e.g., the sensor module 176 of FIG. 1) may detect the light that has passed through the display member 201. According to an embodiment, the sensor module (not shown) may include a first sensor module (not shown) capable of detecting the light passed through the first display member 201a and a second sensor module (not shown) capable detecting the light passed through the second display member 201b. For example, the first sensor module (not shown) may detect light from behind the first display member 201a (e.g., +Y direction), and the second sensor module (not shown) may detect light from behind the second display member 201b. According to an embodiment, the sensor module (not shown) may include a third sensor module (not shown) capable of detecting light in front of the display member 201 (e.g., -Y direction). For example, the third sensor module (not shown) may detect light in front of the display member 201 (e.g., -Y direction). According to an embodiment, the sensor module (not shown) may include an illuminance sensor. According to an embodiment, the third sensor module (not shown) may have the same configuration in whole or part as the configuration of the second camera module 253.

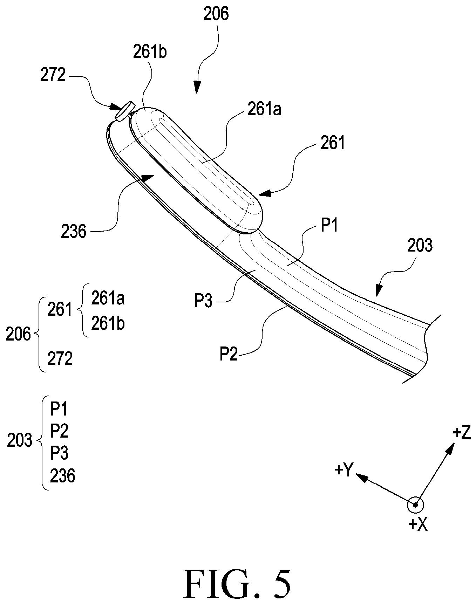

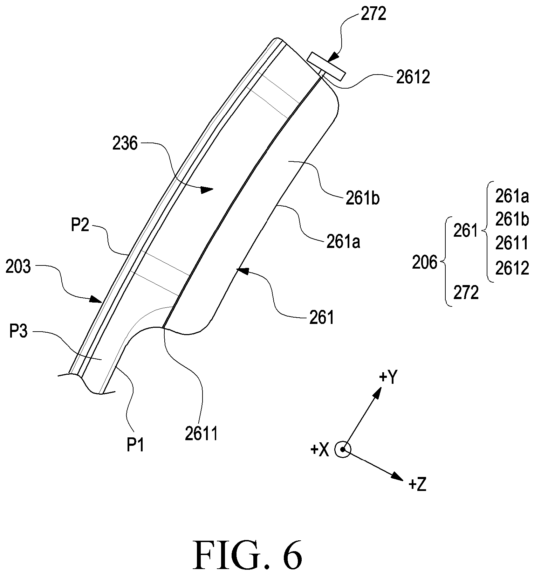

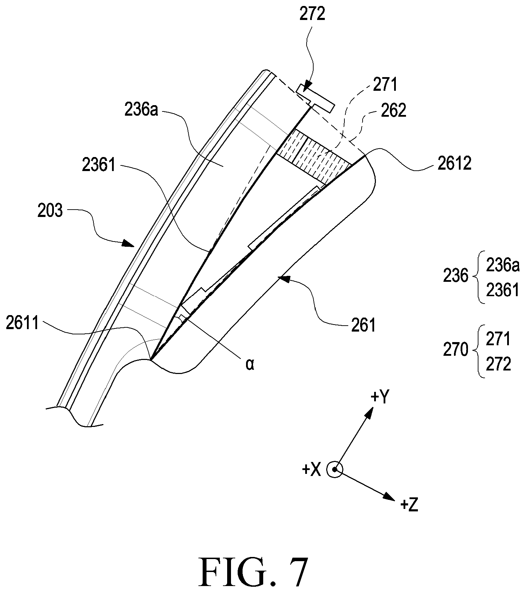

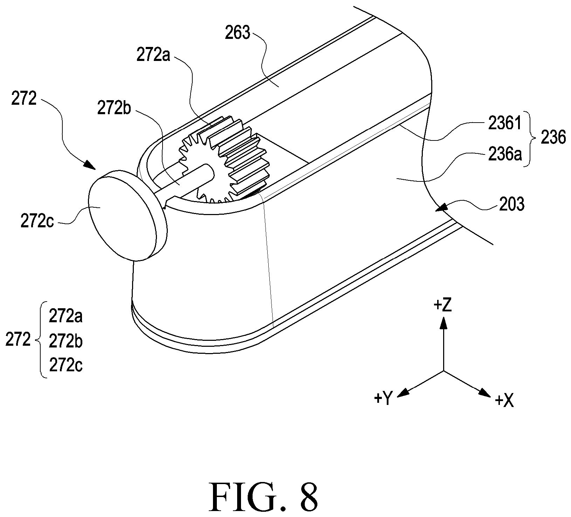

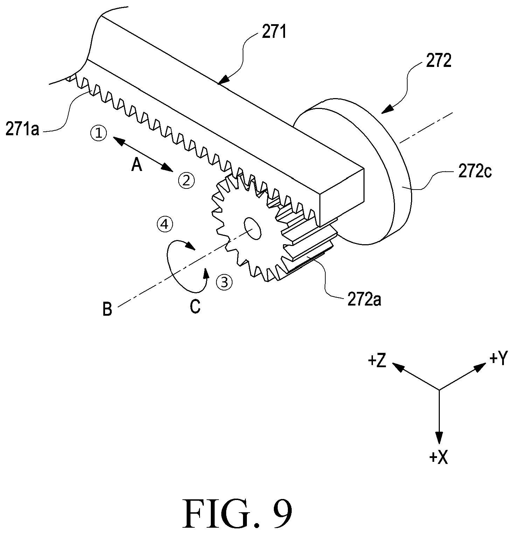

FIG. 5 is a perspective view illustrating a wearing member and a pad according to an embodiment of the disclosure. FIG. 6 is a side view illustrating a wearing member and a supporting structure in a first state according to an embodiment of the disclosure. FIG. 7 is a side view illustrating a wearing member and a supporting structure in a second state according to an embodiment of the disclosure. FIG. 8 is a view illustrating a portion of a supporting structure according to an embodiment of the disclosure. FIG. 9 is a view illustrating a portion of a driving assembly according to an embodiment of the disclosure.

The configuration of the wearing member 203 of FIGS. 5 to 8 may be identical in whole or part to the configuration of the wearing member 203 of FIGS. 2 to 4.

Referring to FIGS. 5 to 8, in an embodiment, the wearable electronic device 101 (e.g., the electronic device 101 of FIG. 1 and/or the wearable electronic device 101 of FIGS. 2 to 4) may include at least one supporting structure 206 disposed on the wearing member 203. For example, the wearable electronic device 101 may be worn on the user's body (e.g., head), and the supporting structure 206 may support a contact portion (e.g., the back of the head) when the wearable electronic device 101 is worn on the user's body (e.g., head). For example, the supporting structure 206 may apply a predetermined pressure for support to the contact portion. The predetermined pressure may be set considering the wearability of the user while maintaining the wearing state of the wearable electronic device 101.

According to embodiments of the disclosure, the supporting structure 206 may be formed to manually and/or automatically adjust the angle for the wearing member 203 according to the shape of the body (e.g., the head). The supporting structure 206 may provide a support force of a predetermined magnitude regardless of the user's body (e.g., head) and/or contact portion (e.g., the back of the head) of various sizes and/or shapes. Embodiments of the supporting structure 206 of the disclosure may also be applied when the wearable electronic device 101 is worn on various body parts such as the user's head, arms, and legs.

In an embodiment, the wearing member 203 may include a first surface P1 (e.g., the first surface 231c of FIG. 2) and a second surface P2 (e.g., the second surface 231d of FIG. 2) opposite to the first surface P1. For example, in the state in which the user wears the wearable electronic device, the first surface P1 of the wearing member 203 may at least partially contact the user's body (e.g., head), and the second surface P2 of the wearing member 203, as an outer surface, may be at least partially exposed outward of the wearable electronic device. For example, the wearing member 203 may include a third surface P3 surrounding a space formed between the first surface P1 and the second surface P2. In an embodiment, the wearing member 203 may include a seating area 236 in which the supporting structure 206 is disposed on the first surface P1.

According to an embodiment, the seating area 236 may include an opening (e.g., the opening 2361 of FIGS. 7 and 8) formed through a portion of one surface (e.g., the first surface P1) of the wearing member 203 and a seating wall (e.g., the seating wall 236a of FIGS. 7 and 8) surrounding an inner space of the opening 2361.

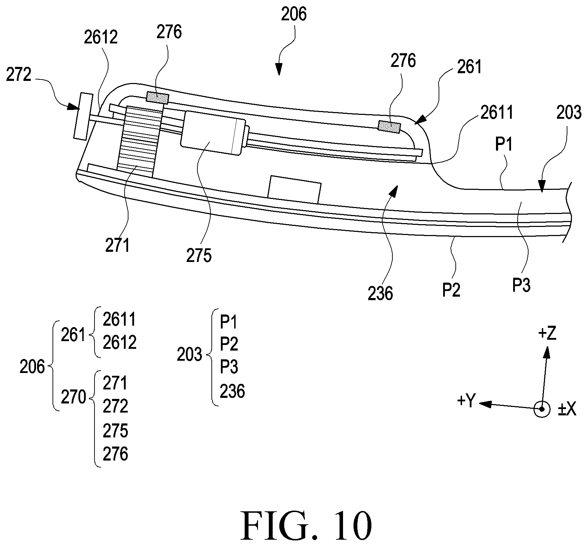

According to an embodiment, the opening 2361 of the seating area 236 may be formed to accommodate a portion (e.g., a portion of the pad 261 and/or the bracket 263) of the supporting structure 206. For example, the opening 2361 may be formed to correspond to the pad 261. According to an embodiment, the opening 2361 of the seating area 236 may be formed in an area at least partially overlapping the pad 261 of the supporting structure 206 in the thickness direction (e.g., the Z-axis) (see FIG. 8). For example, a bracket 263 (e.g., the bracket 263 of FIG. 10) of the supporting structure 206 may be disposed in the seating area 236.

According to an embodiment, the opening 2361 of the seating area 236 may be covered by the pad 261 and/or the side cover (e.g., the side cover 262 of FIG. 7) of the supporting structure 206. According to an embodiment, as is described again below, the pad 261 of the supporting structure 206 may be rotatably connected to the opening 2361 of the seating area 236 or to a portion of the edge area of the seating wall 236a forming the opening 2361. For example, the opening 2361, the pad 261 and/or the side cover 262 of the supporting structure 206 may provide a mounting space for accommodating at least some of the remaining components (e.g., the bracket 263 and/or the driving assembly 270) of the supporting structure 206. According to an embodiment, the mounting space may be enlarged or shrunken as the pad 261 rotates about at least one rotational axis with respect to the seating area 236.

According to an embodiment, the seating wall 236a may be connected to the third surface P3 and/or the first surface P1 of the wearing member 203, and may correspond to a portion of the third surface P3 and/or the first surface P1, but may be separately referred to for convenience of description. For example, the seating wall 236a may have a larger thickness (e.g., a thickness in the Z-axis direction) than the third surface P3 of another area of the wearing member 203. For example, the seating area 236 may be formed such that a step in the thickness direction (e.g., the Z-axis direction) is present between an edge of the seating wall 236a forming the opening 2361 and the first surface P1 of another area of the wearing member 203.

Referring to FIGS. 5 to 9, in an embodiment, the supporting structure 206 may include a pad 261, a driving assembly 270, and a bracket 263.

In an embodiment, the pad 261 may include a supporting surface 261a and a sidewall 261b extending from the supporting surface 261a. In an embodiment, the supporting surface 261a may at least partially contact a contact portion (e.g., the back of the head). For example, the pad 261 may include a material that may be elastically deformed according to the shape of the contact portion. For example, the pad 261 may have a predetermined thickness (e.g., a thickness in the Z-axis direction). In an embodiment, the supporting surface 261a may at least partially include a curved surface. For example, the supporting surface 261a may be recessed toward a central portion or may have a concave central portion. For example, the supporting surface 261a may have a rectangular shape or may have another polygonal, circular, or atypical shape. For example, a boundary surface between the sidewall 261b of the pad 261 and the supporting surface 261a may be curved. In an embodiment, the sidewall 261b and the seating area 236 may at least partially overlap each other in their contacting areas, and may include connection structures engaged with each other.

According to an embodiment, the pad 261 may be rotated about at least one rotational axis (not shown) with respect to the seating area 236. For example, the rotational axis (not shown) may be substantially parallel to the X axis. Referring to FIG. 7, the angle between the pad 261 and the wearing member 203 (or the seating area 236) may be referred to as a pad angle α. According to an embodiment, by changing the pad angle α, the placement of the pad 261 may be adjusted such that the supporting surface 261a contacts the wearing portion with as wide an area as possible.

Referring to FIGS. 6 and 7, in an embodiment, the pad 261 may include a fixed end 2611 and a movable end 2612 positioned opposite to the fixed end 2611. For example, the fixed end 2611 may be rotatably connected to an area adjacent to the opening 2361 of the seating area 236, and the movable end 2612 may be provided to be separable from the seating area 236. For example, the pad 261 may be rotated with respect to the seating area 236 about the rotational axis (e.g., the X axis) adjacent to the fixed end 2611. For example, the fixed end 2611 may be connected to the seating area 236 through a hinge member (not shown). In an embodiment, the rotation of the pad 261 may be performed based on a movement of the movable end 2612 in one axis direction (e.g., the first axis direction A of FIG. 9) by a part (e.g., the first gear 271) of the driving assembly 270.

Referring to FIG. 9, in the disclosure, the moving direction of a part (e.g., the first gear 271) of the driving assembly 270 and/or the movable end 2612 of the pad 261 may be referred to as a "first axis direction A". For example, the "first axis direction A" may be substantially parallel to the thickness direction (e.g., the Z-axis direction) of the wearable electronic device 101, the wearing member 203, and/or the supporting structure 206. **In** the disclosure, a rotational axis direction of a part (e.g., the second gear 272) of the driving assembly 270 crossing the first axis direction A may be referred to as a "second axis direction B". For example, the "second axis direction B" may be substantially parallel to the length direction (e.g., the Y-axis direction) of the wearable electronic device 101, the wearing member 203, and/or the supporting structure 206. For example, the second axis direction B may be substantially orthogonal to the first axis direction A.

Referring to FIGS. 5 to 7, the state of the supporting structure 206 may be changed between the "first state" and the "second state" based on the rotation of the pad 261. For example, the state of the supporting structure 206 illustrated in FIGS. 5 and 6 may be referred to as the "first state" and, in this case, the pad angle α may be 0. For example, the state of the supporting structure 206 illustrated in FIG. 7 may be referred to as the "second state", in which the pad angle α may be larger than 0 and smaller than the designated angle. For example, the designated angle is the maximum angle at which the pad 261 may be rotated, and may be larger than 0 and smaller than about 90 degrees, e.g., may be larger than about 10 degrees and smaller than about 60 degrees.

Referring to FIG. 7, in an embodiment, the pad 261 may further include a side cover 262 connected to each of the pad 261 and the seating area 236. For example, the side cover may include a film member connecting the respective edges of the seating area 236 and the supporting structure 206. For example, one end of the side cover 262 may be coupled to the seating area 236 and the other end of the side cover 262 may be coupled to the supporting structure 206. According to an embodiment, at least a partial area of the side cover 262 may be deformed according to the rotational operation of the supporting structure 206, and for example, may be formed to be folded or unfolded. For example, in the first state of the supporting structure 206, the side cover 262 may be in a folded state and be disposed in a space between the supporting structure 206 and the seating area 236. For example, in the second state of the supporting structure 206, the side cover 262 may be in an unfolded state and surround the space between the supporting structure 206 and the seating area 236. According to an embodiment, the side cover 262 may be integrally formed with the pad 261 and/or the support area or may be omitted.

Referring to FIGS. 8 and 9, in an embodiment, the driving assembly 270 may include a first gear 271 and a second gear 272 engaged with each other. According to an embodiment, the first gear 271 and the second gear 272 may be formed to move the movable end 2612 of the pad 261 in the first axis direction A. The second gear 272 may be formed to linearly move the first gear 271 in the first axis direction A. One end of the first gear 271 may be connected to the movable end 2612 of the pad 261 or an area adjacent thereto.

According to an embodiment, the first gear 271 may include a rack gear. For example, the first gear 271 may extend in the first axis direction A. For example, the first gear 271 may include a first tooth area 271a in which a plurality of saw teeth are continuously disposed in the first axis direction A in the first state of the supporting structure 206. According to an embodiment, the second gear 272 may include a second tooth area 272a engaged with the first tooth area 271a of the first gear 271, a gear shaft 271b, and/or a handle 271c. For example, the gear shaft 271b may extend in parallel with the second axis direction B of FIG. 9. The second tooth area 272a may be formed on an outer circumferential surface of a gear member (e.g., a pinion) disposed at one end of the gear shaft 271b. For example, the handle 271c may be disposed at the other end of the gear shaft 271b. For example, the gear member and/or the handle 271c may be coupled to or integrally formed with the gear shaft 271b. If the second gear 272 is rotated in a first rotating direction (e.g., the first rotating direction C of FIG. 9), the first gear 271 engaged with the second tooth area 272a may be linearly moved in the first axis direction A. For example, one end of the first gear 271 may be connected to the movable end 2612 of the pad 261, and the movable end 2612 may be moved in the first axis direction A together with the first gear 271. For example, if the second gear 272 is rotated in a 1-1th rotating direction (e.g., the direction of arrow ③ in FIG. 9), the first gear 271 may be moved in a 1-1th axis direction (e.g., the direction of arrow ① in FIG. 9). If the first gear 271 moves in the 1-1th axis direction, the pad angle α may increase. For example, if the second gear 272 is rotated in the 1-2th rotating direction (e.g., the direction of arrow ④ in FIG. 9), the first gear 271 may be moved in the 1-2th axis direction (e.g., the direction of arrow ② in FIG. 9). If the first gear 271 moves in the 1-2th axis direction, the pad angle α may decrease. In an embodiment, the moving direction of the first gear 271 and/or the rotating direction of the second gear 272 may be opposite to the above-described direction. However, the type and/or shape of the first gear 271 and/or the second gear 272 are not limited to those described above. For example, the driving assembly 270 may include various types of gear members such as a screw gear, a flat gear, a helical gear, or a bevel gear, as well as the rack and pinion gears.

According to an embodiment, the handle 271c may be disposed outside the housing 210 of the wearable electronic device 101. For example, the second gear 272 may be configured to rotate in the first rotating direction C as a whole if the user turns the handle 271c in the first rotating direction (e.g., the first rotating direction C of FIG. 9). According to an embodiment, the user may manually adjust the pad angle α of the supporting structure 206. For example, if the user turns the handle 271c protruding outward of the wearable electronic device 101 in the first rotating direction C, the second gear 272 and the first gear 271 may be operated, and the pad angle α may be changed.

In an embodiment (not shown), the first gear 271 and the second gear 272 of the driving assembly 270 may be omitted, and an elastic member such as a spring may be disposed between the seating area 236 and the pad 261 to provide a compressive force in the first axis direction A to the movable end 2612 of the pad 261. For example, the elastic member may allow the pad angle α to be changed according to the shape of the contact portion (e.g., the back of the head), but may provide a support force for maintaining the wearing state of the wearable electronic device 101 by pressing the contact portion.

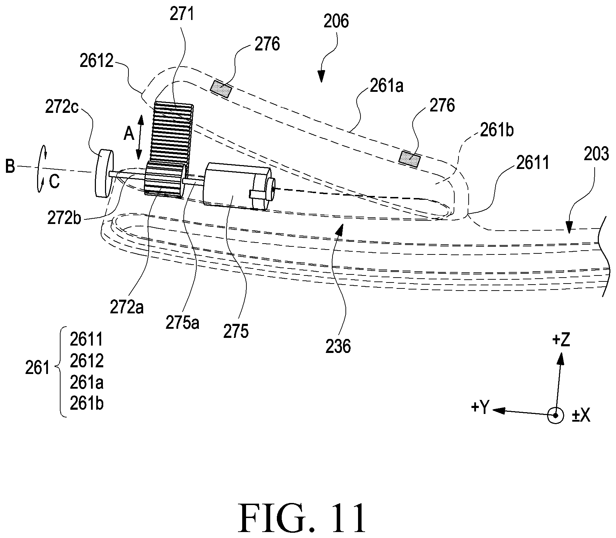

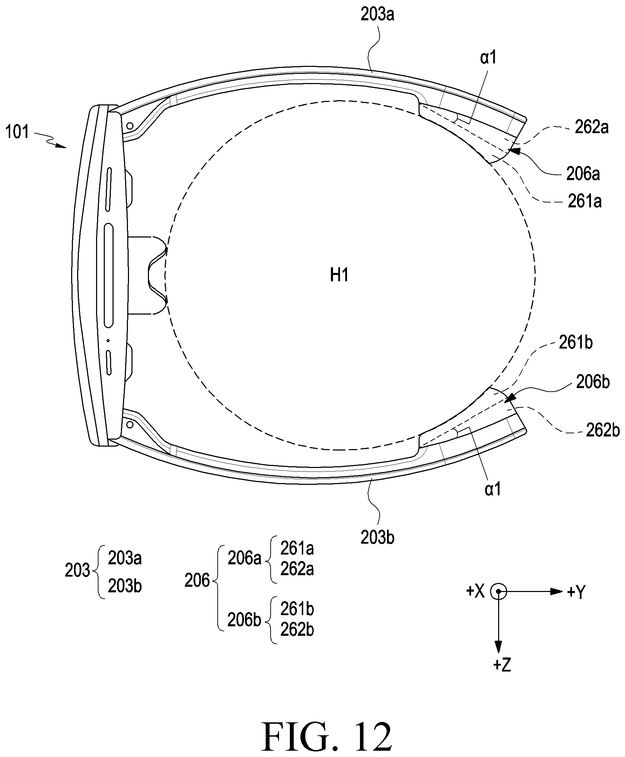

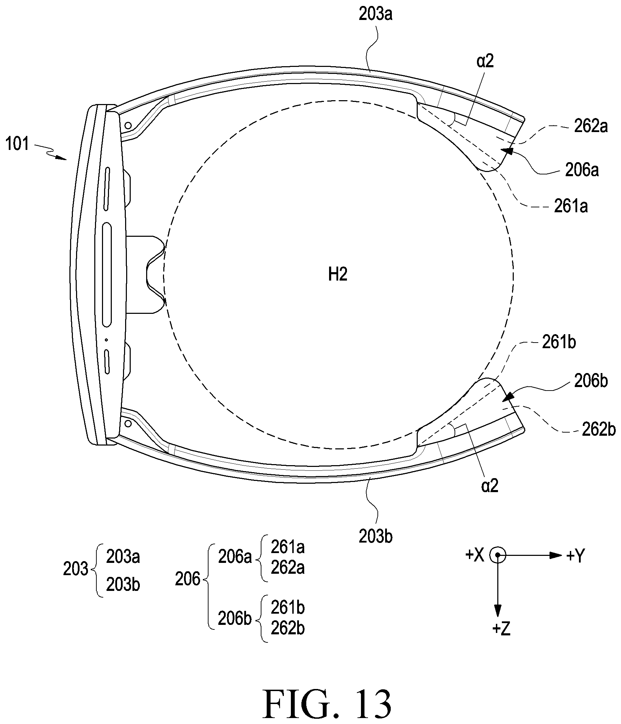

FIG. 10 is a view illustrating a wearing member and a supporting structure in a first state according to an embodiment of the disclosure. FIG. 11 is a view illustrating a wearing member and a supporting structure in a second state according to an embodiment of the disclosure. FIG. 12 is a plan view illustrating a wearable electronic device and a wearing subject according to an embodiment of the disclosure. FIG. 13 is a plan view illustrating a wearable electronic device and a wearing subject according to an embodiment of the disclosure.

The wearing member 203 of FIGS. 10 and 11 may be referred to as the wearing member 203 of FIGS. 5 to 8. The supporting structure 206 of FIGS. 10, 11, 12, and 13 may be referred to as the supporting structure 206 of FIGS. 5 to 7. The configuration of the wearable electronic device 101 of FIGS. 12 and 13 may be identical or similar in whole or part to the configuration of the electronic device 101 of FIG. 1 and/or the wearable electronic device 101 of FIGS. 2 to 4. The description made above with reference to FIGS. 5 to 8 may be likewise applied to the components assigned the same reference numbers, and no further description thereof may be given below.

In an embodiment, the driving assembly 270 of the supporting structure 206 may further include a motor 275, a first sensor module (not shown, e.g., the sensor module 176 of FIG. 1), and/or a second sensor module 276. According to an embodiment, the supporting structure 206 may not only manually adjust the pad angle (e.g., the pad angle α of FIG. 7) using the handle 272c, but may also automatically adjust the pad angle α using the motor 275, the first sensor module (not shown), and/or the at least one second sensor module 276.

The embodiment described with reference to FIGS. 7 and 8 may be applied to the embodiments of FIGS. 10 to 13. Referring to FIGS. 10 and 11, according to an embodiment (not shown), the supporting structure 206 may further include a side cover (e.g., the side cover 262 of FIG. 7) and/or a bracket (e.g., the bracket 263 of FIG. 8). According to an embodiment, the components (e.g., at least a portion of the first gear 271 and the second gear 272 and/or the motor 275) of the driving assembly 270 may be disposed in an inner space surrounded by the seating area 236, the pad 261, and/or the side cover (e.g., the side cover 262 of FIG. 7). For example, the motor 275 may be fixed to a portion of the bracket 263 (e.g., the bracket 263 of FIG. 8) of the supporting structure 206.

According to an embodiment, the motor 275 may be connected to a portion (e.g., the gear shaft 271b) of the second gear 272 to provide a driving force for rotating the second gear 272. Referring to FIG. 11, the second gear 272 may be rotated about at least one rotational axis, e.g., the second axis direction B (e.g., the Y-axis direction), based on the driving force received from the motor 275. The second gear 272 may be rotated counterclockwise or clockwise (e.g., the first rotating direction C). For example, the gear shaft 271b (e.g., the gear shaft 271b of FIG. 9) of the second gear 272 may be substantially parallel to the second axis direction B (e.g., the Y-axis direction), which is the rotational axis, and may be rotatably connected to the motor 275. For example, the motor 275 may include a connection member 275a connected to transmit a driving force to the second gear 272. For example, the connection member 275a may be a shaft member extending in the second axis direction B (e.g., the Y-axis direction) between the second gear 272 and the motor 275. For example, if the motor 275 rotates the connection member 275a in the first rotating direction C, the second gear 272 member fixedly connected to the connection member 275a may rotate in the first rotating direction C. As described above, the first gear 271 may include a first tooth area 271a (e.g., the second tooth area 271a of FIGS. 8 and 9) engaged with the second tooth area 272a (e.g., the second tooth area 272a of FIGS. 8 and 9) of the second gear 272, and the first gear 271 may be moved in the first axis direction A based on the rotation of the second gear 272. As described above with reference to FIGS. 5 to 9, the movable end 2612 of the pad 261 may be connected to the first gear 271 and may be displaced in the first axis direction A based on the movement of the first gear 271, and accordingly, the pad angle (e.g., the pad angle α of FIG. 7) may be changed.

Referring to FIGS. 12 and 13, in an embodiment, when the user wears the wearable electronic device (e.g., the electronic device 101 of FIG. 1 and/or the wearable electronic device 101 of FIGS. 2 to 4) using the first sensor module (e.g., the sensor module 176 of FIG. 1), the second sensor module 276, and/or the motor 275, the supporting structure 206 may optimize the pad angle α according to the shape of the body part (hereinafter, the "contact portion") (e.g., the occipital part) of the user contacting the pad 261. The first sensor module (not shown), the second sensor module 276, and/or the motor 275 of the driving assembly 270 each may be electrically connected to a processor (e.g., the processor 120 of FIG. 1).

In an embodiment, the first sensor module (not shown, e.g., the sensor module 176 of FIG. 1) may detect whether the user wears the wearable electronic device 101. According to an embodiment, the first sensor module (not shown) may be disposed in at least one camera module (e.g., the first camera module 251, the second camera module 253, and/or the third camera module 255 of FIGS. 3 and 4).

In an embodiment, the first sensor module (e.g., the sensor module 176 of FIG. 1) may include a proximity sensor. For example, the first sensor module (not shown) or the proximity sensor may be included in a third camera module (e.g., the third camera module 255 of FIGS. 3 and 4). For example, the third camera module (e.g., the third camera module 255 of FIGS. 3 and 4) may include an infrared (IR) camera (e.g., a time of flight (TOF) camera or a structured light camera). For example, the IR camera may operate as at least a portion of the first sensor module (e.g., the sensor module 176 of FIG. 1) for detecting the distance to the subject.

In an embodiment, the second sensor module 276 may include at least one sensor (e.g., a pressure sensor) disposed inside the pad 261. According to an embodiment, the second sensor module 276 may include a plurality of (e.g., two) pressure sensors spaced apart from each other. For example, the second sensor module 276 may be electrically connected to the processor (e.g., the processor 120 of FIG. 1) of the wearable electronic device 101. For example, in the state in which the supporting structure 206 is activated, the second sensor module 276 may measure the pressure applied to the pad 261 and may transmit the measurement value to the processor. For example, the second sensor module 276 may be disposed adjacent to the outer surface of the pad 261 inside the pad 261. For example, the second sensor module 276 may be disposed closer to the supporting surface 261a than the sidewall 261b of the pad 261. For example, the second sensor module 276 may overlap the supporting surface 261a in the thickness direction (e.g., the Z-axis direction) of the wearable electronic device 101. For example, the processor may drive the motor 275 by comparing a threshold with the measurement value of the second sensor module 276.

According to an embodiment, the processor (e.g., the processor 120 of FIG. 1) of the wearable electronic device 101 may detect whether the wearable electronic device 101 is worn, using the measurement value of the first sensor module (not shown). For example, the first sensor module may include the proximity sensor, and the processor may detect the wearing state of the wearable electronic device 101 by comparing the distance measurement value of the first sensor module with a designated distance value. According to an embodiment, in the state in which the user wears the wearable electronic device 101, the processor may transmit a driving signal to the motor 275 to optimize the pad angle α, and the pad angle α (e.g., the pad angle α of FIG. 7) may be changed by the operation of the motor 275. If the pad 261 rotates sufficiently, the contact area with the contact portion (e.g., the back of the head) may increase. Further, as the pad 261 presses the contact portion, a support pressure by the contact portion may be applied to the second sensor module 276 (e.g., a pressure sensor) disposed on the pad 261. For example, the processor may adjust the pad angle α by adjusting the operation of the motor 275 by feeding back the measurement value (e.g., a pressure measurement value) of the second sensor module 276. However, the type and function of the first sensor module (e.g., the sensor module 176 of FIG. 1) are not limited to those described above, and the wearable electronic device 101 or the supporting structure 206 may include various types of sensors (e.g., a touch sensor) capable of detecting the user's approach, as well as a proximity sensor.

Referring to FIGS. 12 and 13, the supporting structure 206 may include a first supporting structure 206a and a second supporting structure 206b disposed on a pair of wearing members 203 (e.g., the wearing members 203 of FIGS. 5 to 9), respectively, of the wearable electronic device 101. The first supporting structure 206a and the second supporting structure 206b may include pads 261a and 261b and/or side covers 262a and 262b, respectively.

In an embodiment, the pads 261a and 261b of the supporting structure 206 may include an elastically deformed material, and thus may be deformed to fit the supporting objects (e.g., the first shape H1 and the second shape H2). Different shapes indicated by reference numerals H1 and H2 of FIGS. 12 and 13 may indicate body parts (e.g., the head) of the user wearing the wearable electronic device 101. For example, the pad angles (e.g., the pad angle α of FIG. 7) of the pads 261a and 261b when the supporting structure 206 supports the first shape H1 and the second shape H2 may be the first pad angle α₁ and the pad angle α₂, respectively. For example, the first shape H1 and the second shape H2 may have different sizes and/or shapes, and accordingly, the first pad angle α₁ and the second pad angle α₂ may be different from each other. For example, the second shape H2 may have the shorter length in the front-rear direction (e.g., the length in the Y-axis direction) than the first shape H1, and for example, the second pad angle α₂ may be larger than the first pad angle α₁. The pads 261 or 261a and 261b of the supporting structure 206 according to an embodiment may be rotatably provided to change the angle for the supporting object or the wearing member 203, and thus may contact various types of supporting objects with a relatively large area and provide stable support performance as compared to when the pads 261 are fixedly provided.

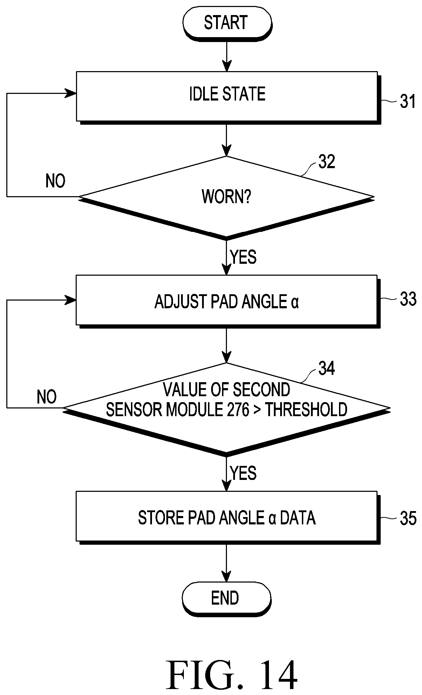

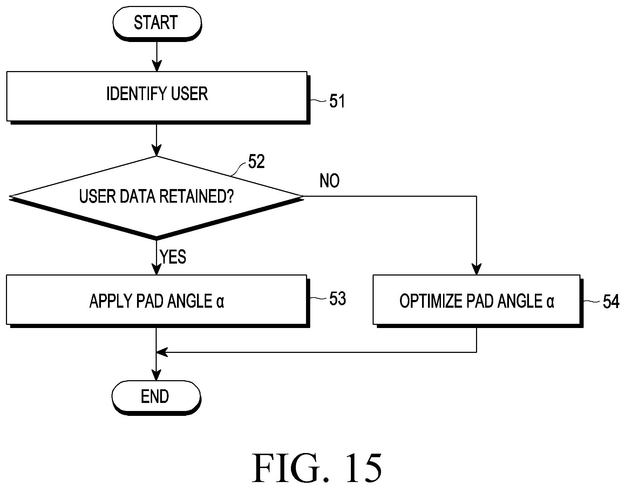

FIG. 14 is a procedural flowchart illustrating a method for adjusting a pad angle of a wearable electronic device according to an embodiment of the disclosure. FIG. 15 is a procedural flowchart illustrating a method for adjusting a pad angle of a wearable electronic device according to an embodiment of the disclosure.

A method of optimizing the pad angle α of the supporting structure 206 with respect to the contact portion (e.g., the back of the head) in the state in which the user wears the wearable electronic device 101 (e.g., the electronic device 101 of FIG. 1 and/or the wearable electronic device 101 of FIGS. 2 to 4) using the supporting structure 206 according to embodiments described with reference to FIGS. 5 to 13 is described below in detail.

Referring to FIG. 12, in an embodiment, the method for adjusting the pad angle α of the supporting structure 206 may include an operation 31 in which the supporting structure 206 is in the idle state, an operation 32 of determining whether the user wears the wearable electronic device 101, an operation 33 of changing the pad angle α, an operation 34 of determining whether the measurement value of the second sensor module 276 (e.g., a pressure sensor) is larger than a threshold, and/or an operation 35 of storing the pad angle α data in a memory (e.g., the memory 130 of FIG. 1).

In an embodiment, the supporting structure 206 may maintain the deactivated idle state in the state in which the user does not wear the wearable electronic device 101 (31). According to an embodiment, the wearable electronic device 101 may determine whether the user wears the wearable electronic device 101 using at least one camera module (e.g., the first camera module 251, the second camera module 253, and/or the third camera module 255 of FIGS. 3 and 4) and/or at least one sensor module (e.g., the sensor module 176 of FIG. 1, the second sensor module 276 of FIGS. 10 and 11) (32). For example, the operation of determining whether the user wears the wearable electronic device 101 (32) may include an operation of transmitting biometric data (e.g., a face image or an iris image) of the user collected by the camera modules 251, 252, and 253 to the processor (e.g., the processor 120 of FIG. 1) and/or an operation of transmitting measurement value (e.g., a distance measurement value, a pressure measurement value, a touch input, and/or a fingerprint) data to the processor 120 by the at least one sensor module 176 or 276. For example, the operation 32 may include an operation of determining whether the processor 120 wears the wearable electronic device 101, based on the data received from the camera modules 251, 252, and 253 and/or the sensor modules 176 and 276.

According to an embodiment, the operation 33 of changing the pad angle α may be performed when it is determined that the user wears the wearable electronic device 101. According to an embodiment, the operation 33 of changing the pad angle α may include an operation in which the processor (e.g., the processor 120 of FIG. 1) generates an electrical signal for driving the motor 275 (e.g., the motor 275 of FIGS. 10 and 11) of the driving assembly 270. For example, the operation 33 may include an operation in which the motor 275 is driven by power received from a battery (e.g., the battery 189 of FIG. 1 and/or the battery 243 of FIGS. 3 and 4). For example, the operation 33 may include an operation in which the second gear 272 (e.g., the second gear 272 of FIGS. 7 to 11) rotates in a first rotating direction (e.g., the first rotating direction C of FIG. 9), and the first gear 271 (e.g., the first gear 271 of FIGS. 7 to 9) moves in a first axis direction A crossing the second axis direction B. For example, the operation 33 may include an operation in which a portion (e.g., the movable end 2612 of FIGS. 6, 7, 10, and 11) of the pad 261 of the supporting structure 206 to which the first gear 271 is connected moves in the first axis direction A, and the pad angle α (e.g., the pad angle α of FIG. 7), which is an inclination of the pad 261 with respect to the wearable electronic device 101, is changed.

According to an embodiment, the operation 34 of determining whether the measurement value of the second sensor module 276 (e.g., the pressure sensor) is larger than the threshold may include an operation of measuring the support pressure by the second sensor module 276 and/or an operation of transmitting the measurement value to the processor. In an embodiment of the disclosure, the operation 34 may be referred to as an "operation of optimizing the pad angle α" together with the operation 33 of changing the pad angle α. For example, in operation 34, if the processor determines that the measurement value of the second sensor module 276 is smaller than a set threshold, the processor may repeat the operation 33 of changing the pad angle α. For example, in operation 34, if the processor determines that the measurement value of the second sensor module 276 is larger than the set threshold, the operation of optimizing the pad angle α may be terminated. If the optimization operation of the pad angle α is terminated, the supporting structure 206 may be changed into the idle state. For example, the processor may terminate the operation of optimizing the pad angle α by applying a driving stop signal to the motor 275.

In an embodiment, the method for adjusting the pad angle α may further include an operation 35 of storing the pad angle α data in a memory (e.g., the memory 130 of FIG. 1). According to an embodiment, if the processor determines that the measurement value of the second sensor module 276 is larger than the set threshold in operation 34, the processor may store the pad angle α data through the pad angle α optimization operation in the memory (e.g., the memory 130 of FIG. 1) before terminating the pad angle α optimization operation. For example, the pad angle α data may include data regarding the number of rotations of the motor 275 corresponding to a specific pad angle α. In an embodiment of the disclosure, the "operation of optimizing the pad angle α" may include operation 33, operation 34, and operation 35 of FIG. 14.

Referring to FIG. 15, in an embodiment, the method for adjusting the pad angle α of the supporting structure 206 may further include an operation 51 of identifying the user, an operation 52 of determining whether the pad angle α data is retained, an operation 53 of applying the pad angle α data, and/or an operation 54 of optimizing the pad angle α.

According to an embodiment, the operation 51 of identifying the user and the operation 52 of determining whether the pad angle α data is retained may be performed between the operation 32 of FIG. 14 and the operation 33 of changing the pad angle α. For example, the operation 51 of identifying the user may be performed by a sensor module (e.g., the sensor module of FIG. 1), a first camera module (e.g., the first camera module 251 of FIGS. 3 and 4), and/or a second camera module (e.g., the second camera module 253 of FIGS. 3 and 4). As an example, the wearable electronic device 101 may include an of collecting user data using the sensor module or the camera module. For example, the user data may be biometric information such as the fingerprint or the iris of the user currently wearing the wearable electronic device 101, and may be stored in the memory (e.g., the memory 130 of FIG. 1).

In an embodiment, the operation 52 of determining whether the pad angle α data is retained may include an operation of comparing and/or determining whether the current user data matches the user data stored in the memory (e.g., the memory 130 of FIG. 1). For example, in operation 52, when user data corresponding to the current user is present in the memory, the pad angle α may be adjusted using the corresponding user data, and the adjustment of the pad angle α may be terminated. For example, the specific user data may correspond to specific angular data (e.g., the number of rotations of the motor 275). For example, in operation 52, when the user data corresponding to the current user is not present in the memory, the angle optimization operation 54 of the pad 261 may be performed. The operation 54 may include the operation 33 of changing the pad angle α described with reference to FIG. 14 and the operation 34 of determining whether the measurement value of the second sensor module 276 (e.g., a pressure sensor) is larger than a threshold. In an embodiment, the operation 54 may further include an operation 35 of storing pad angle α data in the memory (e.g., the memory 130 of FIG. 1) described with reference to FIG. 14.

A wearable electronic device 101 according to an embodiment of the disclosure may comprise a lens frame 202 formed to accommodate a display member, a pair of wearing members 203 respectively connected to two opposite ends 202c and 202d of the lens frame, at least one seating area 236, and at least one supporting structure 206 connected to the seating area. The pair of wearing members may include a first surface 231c (P1) and a second surface 231d (P2) facing in a direction opposite to the first surface. The seating area may be formed on a portion of the first surface. The supporting structure may include a pad 261 and a driving assembly 270 disposed between the seating area and the pad. The supporting structure may include a supporting surface 261a facing the seating area, a fixed end 2611 rotatably connected to a portion of the seating area, and a movable end 2612 positioned opposite to the fixed end. The driving assembly may be configured to move the movable end in a first axis direction A with respect to the seating area. When the driving assembly operates, at least a portion of the pad may be rotated relative to the seating area, and a pad angle α between the pad and the seating area may be changed.

In an embodiment, at least a portion of the pad may be rotated within a designated angular range about at least one rotational axis parallel to a second axis direction B crossing the first axis direction.

In an embodiment, the driving assembly may include a first gear 271 connected to an area adjacent to the movable end of the pad and including a first tooth area 271a extending in the first axis direction. The driving assembly may include a second gear 272 including a second tooth area 272a engaged with the first tooth area. The second gear may rotate about a second axis direction crossing the first axis direction.

In an embodiment, the first gear may have one end connected to the pad and move in the first axis direction when the second gear rotates.

In an embodiment, each of the first gear and the second gear may include a rack gear and a pinion gear, respectively.

In an embodiment, the second gear may include a gear shaft 272b extending in the second axis direction and a handle 272c fixedly connected to one end of the gear shaft. The handle may protrude outward of the wearable electronic device.

In an embodiment, when the handle is rotated about the second axis direction, a portion of the pad may be moved in the first axis direction.

In an embodiment, the first gear and the second gear may be further adjacent to the movable end of the pad than to the fixed end of the pad.

In an embodiment, the driving assembly may further include a motor 275 rotatably connected with the second gear.

In an embodiment, the wearable electronic device may further comprise a first sensor module (e.g., 176 of FIG. 1) disposed on at least one of the lens frame or the pair of wearing members. The first sensor module (e.g., a proximity sensor or a touch sensor) may recognize a user's approach or contact to the wearable electronic device.

In an embodiment, the driving assembly may include at least one second sensor module 276 (e.g., a pressure sensor) disposed inside a supporting surface of the pad and measuring a pressure applied to the pad.

In an embodiment, the wearable electronic device may further comprise a printed circuit board 241 disposed in at least one of the pair of wearing members and a processor 120 disposed on the printed circuit board. The processor may be electrically connected to each of the motor, the first sensor module, and the second sensor module.

In an embodiment, the supporting structure may further include a bracket 263 disposed in the seating area. At least a portion of the driving assembly may be seated in an inner space formed between the bracket and the pad.

In an embodiment, the supporting structure may further include a side cover 262 extending between an edge of the seating area and an edge of the pad. The side cover may be formed to be expandable or contractable according to rotation of the pad.

In an embodiment, the side cover may be disposed in an inner space surrounded by the seating area and the pad in a state in which at least a portion of the side cover is folded when the angle is 0.

The wearable electronic device 101 according to an embodiment of the disclosure may comprise at least one wearing member 203 and a supporting structure 206 disposed on a portion of the wearing member. The supporting structure may include a pad 261 and a driving assembly 270 disposed inside the pad. The pad may include a supporting surface 261a at least partially contacting a user's body, a fixed end 2611 rotatably connected to a portion of the wearing member, and a movable end 2612 positioned opposite to the fixed end. The driving assembly may include a first gear 271 having one end connected to the pad and formed to be movable in the first axis direction A. The driving assembly may include a second gear 272 engaged with the first gear and formed to be rotatable about a second axis direction B crossing the first axis direction. When the second gear rotates, the first gear may move in the first axis direction, and at least a portion of the pad may rotate about at least one rotational axis parallel to the second axis direction.

In an embodiment, the first gear may include a rack gear including a first tooth area 271a extending in the first axis direction. The second gear may include a pinion gear formed to engage with the first tooth area. The second gear may include a handle 272c protruding outward of the wearable electronic device.

In an embodiment, when the handle is rotated about the second axis direction, a portion of the pad may be moved in the first axis direction.

In an embodiment, the wearable electronic device may further comprise a printed circuit board 241 disposed in the wearing member, a processor 120 disposed on the printed circuit board, and/or a first sensor module (e.g., 176 of FIG. 1) disposed on the wearing member. The first sensor module (e.g., a proximity sensor or a touch sensor) may be electrically connected to the processor and may recognize a user's approach or contact to the wearable electronic device.

In an embodiment, the driving assembly may further include a motor 275 electrically connected to the processor and rotatably connected with the second gear. The driving assembly may further include at least one second sensor module 276 disposed inside the supporting surface of the pad. The second sensor module (e.g., a pressure sensor) may measure a pressure applied to the pad.

A wearable electronic device is generally equipped with a display member in the form of a glasses frame, and may process a virtual object through the display member. The wearable electronic device may include virtual reality (VR), augmented reality (AR), mixed reality (MR), and/or extended reality (XR) glasses. Such a wearable electronic device may be heavier than general glasses. Accordingly, when worn on the user's head, the wearable electronic device may not be sufficiently supported but may sag depending on the size or shape of the head. In this case, the wearability may be enhanced by increasing the friction between the wearable electronic device and the wearing portion (e.g., the head). For example, a material with a higher friction coefficient may be applied to the nose support, or the friction between the wearing member and the head may be increased by increasing the folding strength of the hinge structure between the wearing member and the glasses frame. Meanwhile, a pad member including an elastic material may be attached to a portion contacting the body in the wearing member (e.g., temple) of the wearable electronic device. In general, the wearing member or the pad member may be fixedly mounted on the wearable electronic device. In this case, depending on the shape of the contact portion (e.g., the back of the head), the wearing member or the pad member may not tightly contact but may rather be lifted up the wearing member or pad member. The method for increasing the friction between the wearable electronic device and the wearing portion (e.g., head) may be insufficient to address such lifting issue.

According to an embodiment of the disclosure, there may be provided a wearable electronic device including a pad contacting the user's body (e.g., head) and a driving assembly for adjusting the angle of the pad by rotating the pad according to the size or shape of the contact portion (e.g., the back of the head).

The disclosure is not limited to the foregoing embodiments but various modifications or changes may rather be made thereto without departing from the spirit and scope of the disclosure.

According to an embodiment of the disclosure, it is possible to increase the friction between the contact portion and the supporting structure and maximize the supporting area between the contact portion and the pad by manually or automatically adjusting the pad angle according to the shape of the contact portion (e.g., the back of the head) in a state in which the wearing member is mounted with the supporting structure in contact with the user's body (e.g., head).

Effects of the disclosure are not limited to the foregoing, and other unmentioned effects would be apparent to one of ordinary skill in the art from the following description.

The electronic device according to an embodiment of the disclosure may be one of various types of devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or Further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (101) comprising:
a lens frame (202) configured to accommodate a display member;
a first wearing member (203a) and a second wearing member (203b) the first wearing member and the second wearing member being respectively connected to opposite ends (202c, 202d) of the lens frame, and each of the first wearing member and the second wearing member comprising a first surface (231c; P1) and a second surface (231d; P2) facing in a direction opposite to the first surface;
seating areas (236) comprising an opening (2361) in a portion of the first surface of the first wearing member and the second wearing member (203) and a seating wall (236a) surrounding an inner space of an opening (2361) of the first wearing member and the second wearing member (203); and
supporting structures (206) provided in the seating areas,
wherein each supporting structure comprises:
a pad (261) comprising a supporting surface (261a) facing an opening (2361) of a seating area (236), a fixed end (2611) rotatably connected to a surrounding area of the opening (2361) of the seating area (236), and a movable end (2612) positioned opposite to the fixed end;
a driving assembly (270) provided at least partially between the seating area and the pad and configured to move the movable end in a first axis direction (A) relative to the seating area, and
wherein when the driving assembly operates, at least a portion of the pad is configured to rotate relative to the seating area, and a pad angle (α) between the pad and the seating area is configured to be changed.

2. The wearable electronic device of claim 1, wherein at least a portion of the pad is configured to be rotated within a designated angular range about a rotational axis parallel to a second axis direction (B) crossing the first axis direction.

3. The wearable electronic device of claim 1, wherein the driving assembly comprises:
a first gear (271) connected to an area adjacent to the movable end of the pad, the first gear comprising a first tooth area (271a) extending in the first axis direction; and
a second gear (272) configured to rotate about a second axis direction crossing the first axis direction, the second gear comprising a second tooth area (272a) engaged with the first tooth area.

4. The wearable electronic device of claim 3, wherein an end of the first gear is connected to the pad, and the first gear is configured to move in the first axis direction when the second gear rotates.

5. The wearable electronic device of claim 3, wherein the first gear is a rack gear and the second gear is a pinion gear.

6. The wearable electronic device of claim 4, wherein the second gear further comprises:
a gear shaft (272b) extending in the second axis direction; and
a handle (272c) fixedly connected to an end of the gear shaft and protruding outward of the wearable electronic device.

7. The wearable electronic device of claim 6, wherein when the handle rotating about the second axis direction, a portion of the pad is configured to move in the first axis direction.

8. The wearable electronic device of any one of claims 4 to 7, wherein the first gear and the second gear are closer to the movable end of the pad than to the fixed end of the pad.

9. The wearable electronic device of any one of claims 4 to 8, wherein the driving assembly further comprises a motor (275) rotatably connected with the second gear.

10. The wearable electronic device of claim 9, further comprising:
at least one first sensor module provided on at least one of the lens frame, the first wearing member, or the second wearing member, the at least one first sensor module being configured to sense a user's approach or contact to the wearable electronic device.

11. The wearable electronic device of claim 10, wherein the driving assembly comprises at least one second sensor module (276) provided inside the supporting surface of the pad and configured to sense a pressure applied to the pad.

12. The wearable electronic device of claim 11, further comprising:
a printed circuit board (241) provided in at least one of the first wearing member or the second wearing member; and
a processor (120) provided on the printed circuit board and electrically connected to the motor, the at least one first sensor module and the at least one second sensor module.

13. The wearable electronic device of any one of claims 1 to 12, wherein the supporting structure further comprises a bracket (263) provided in the seating area, and
wherein at least a portion of the driving assembly is seated in an inner space formed between the bracket and the pad.

14. The wearable electronic device of any one of claims 1 to 13, wherein the supporting structure further comprises a side cover (262) configured to extend between an edge of the seating area and an edge of the pad and configured to be expandable or contractible according to rotation of the pad.

15. The wearable electronic device of claim 14, wherein based on the pad angle (α) between the pad and the seating area being 0 degrees, the side cover is provided in an inner space surrounded by the pad and the seating area with at least a portion of the side cover being folded.
